# FASCICULE DE BREVET EUROPEEN

(11) **EP 2 187 143 B1**
(45) Date de publication et mention de la délivrance du brevet: **20.04.2016**
(21) Numéro de dépôt: 09175362.4
(22) Date de dépôt: 09.11.2009
(51) Int. Cl.: F24H 1/20, F24H 8/00

(54) **Système de chauffage à tube immergé avec récupération de chaleur latente**
Heizungssystem mit Tauchrohr und Rückgewinnung der latenten Wärme
Dip-tube heating system with latent heat recovery

(30) Priorité: 13.11.2008 FR 0857698
(43) Date de publication de la demande: 19.05.2010
(73) Titulaire: PLDF, 22400 Lamballe (FR)
(72) Inventeur: Le Du, Patrice, 56100, Lorient (FR); Madec, Yannick, 22400, Saint Denoual (FR)
(74) Mandataire: Novagraaf Technologies

(56) Documents cités:
- FR-A- 2 636 125
- NL-A- 6 504 669
- US-A- 1 107 534
- US-A- 4 392 610
- US-A- 4 545 329
- US-A- 4 641 631
- US-A- 4 699 122

## Description

### Domaine de l'invention

La présente invention se situe dans le domaine des chauffages à tube immergé compact pour la production de liquides chauds en bains, en cuves ou en ballons.

Plus précisément, la présente invention concerne un système de chauffage à tube immergé destiné à chauffer un liquide dans une cuve comprenant un brûleur et un tube échangeur de chaleur destiné à être placé au moins en partie dans la cuve, raccordé par une extrémité amont à la chambre de combustion du brûleur et dont l'extrémité aval est destinée à être disposée à l'extérieur de la cuve, de sorte que les gaz de combustion du brûleur circulent dans le tube échangeur de chaleur pour chauffer le liquide contenu dans la cuve.

### Arrière-plan technologique

Dans de tels systèmes de chauffage, les gaz de combustion circulant dans le tube échangeur de chaleur sont issus de la combustion d'un air comburant et d'un gaz combustible et sont produits par le brûleur. Deux types de brûleurs peuvent être employés: les brûleurs à mélange au nez et les brûleurs à pré-mélange. Dans les brûleurs à mélange au nez, l'air comburant et du gaz combustible sont acheminés séparément dans la chambre de combustion du brûleur et la combustion s'effectue à la mise en contact de l'air et du gaz. La vitesse de mise en contact étant faible, la flamme se développe sur une longueur importante. La combustion est alors peu intense et le rendement énergétique du système limité. Dans les brûleurs à pré-mélange, le mélange air/gaz est effectué dans une chambre de pré-mélange située en amont de la chambre de combustion du brûleur. Ce type de brûleur permet d'obtenir des flammes très courtes et une combustion intense, ce qui permet d'améliorer le rendement global du système.

Outre l'utilisation d'un brûleur à pré-mélange, une amélioration du rendement énergétique du système peut être également réalisée en modifiant la géométrie du tube échangeur de chaleur, notamment en agissant sur le diamètre et/ou la longueur du tube. Il est notamment connu d'utiliser un tube de petit diamètre pour élever la vitesse de déplacement des gaz de combustion dans le tube et augmenter l'échange de chaleur avec le liquide à chauffer. On peut alors atteindre un rendement sur PCI (Pouvoir Calorifique Inférieur) de plus de 90%.

Le document US4641631 montre un système de chauffage à tube immergé monté dans une cuve avec un dispositif de récupération de chaleur latente des gaz de combustion situé en dehors de la cuve. Le document US4545329 montre également un système de chauffage à tube immergé monté dans une cuve.

### Résumé de l'invention

La présente invention a pour but d'augmenter le rendement énergétique d'un système de chauffage à tube.

L'invention a pour objet un système de chauffage à tube immergé compact destiné à être monté sur une cuve comprenant une entrée de liquide et à chauffer un liquide dans ladite cuve, ledit système comprenant:
- un brûleur alimenté en air comburant et en gaz combustible pour produire des gaz de combustion,
- un tube échangeur de chaleur destiné à être placé au moins en partie dans la cuve, raccordé par une extrémité amont à la chambre de combustion du brûleur et dont l'extrémité aval est destinée à être disposée à l'extérieur de la cuve, de sorte que *les* gaz de combustion du brûleur circulent dans le tube échangeur de chaleur pour chauffer le liquide contenu dans la cuve,
caractérisé en ce qu'il comprend en outre un dispositif de récupération de chaleur latente de gaz apte à récupérer toute ou partie de la chaleur latente de gaz combustion du brûleur circulant dans ledit tube échangeur de chaleur et à la transmettre à un liquide destiné à alimenter la cuve.

Le dispositif de récupération de chaleur latente de gaz condense au moins une partie des gaz de combustion du brûleur à l'aide du liquide entrant dans la cuve, la chaleur latente ainsi récupérée par le liquide entrant dans la cuve contribuant ainsi à améliorer le rendement global du système. Plus précisément, on condense au moins une partie de l'eau en phase vapeur contenue dans les gaz de combustion à l'aide du liquide entrant dans la cuve. La chaleur latente de cette eau en phase vapeur est ainsi transmise au liquide entrant dans la cuve.

Le brûleur comprend une chambre de combustion raccordée au tube échangeur de chaleur. Cette chambre de combustion est avantageusement disposée à l'intérieur de la cuve et immergée dans le liquide à chauffer pour augmenter encore le rendement du système.

Selon l'invention, le tube échangeur de chaleur comprend une partie immergée comportant une portion amont connectée par l'extrémité amont au brûleur se prolongeant par une portion aval destinée à déboucher à l'extérieur de la cuve, et éventuellement une partie extérieure non immergée, ledit dispositif de récupération de chaleur latente de gaz étant apte à récupérer toute ou partie de la chaleur latente des gaz combustion circulant dans ladite portion aval et/ou circulant dans la partie extérieure non immergée, de préférence au moins de la chaleur latente de gaz combustion circulant dans ladite portion aval, et de préférence à proximité d'une extrémité aval de ladite partie aval.

Selon l'invention, le dispositif de récupération de chaleur latente de gaz comprend un élément tubulaire entourant une partie du tube échangeur de chaleur et définissant une chambre annulaire avec ladite partie du tube échangeur de chaleur, ledit élément tubulaire comprenant une entrée et une sortie, de sorte que le liquide destiné à alimenter la cuve circule dans ladite chambre annulaire, de ladite entrée vers ladite sortie, afin de récupérer toute ou partie de la chaleur latente de gaz de combustion circulant dans ladite partie du tube échangeur de chaleur. L'élément tubulaire entoure au moins une partie de la portion aval du tube échangeur de chaleur.

Selon un mode de réalisation particulier, la sortie dudit élément tubulaire est disposée au niveau de la partie immergée du tube échangeur de chaleur, ladite sortie étant destinée à être disposée à l'intérieur de la cuve.

Selon un mode de réalisation particulier, l'entrée dudit élément tubulaire est destinée à être disposée à l'extérieur de la cuve et à former l'entrée d'alimentation de la cuve.

En variante, l'entrée et la sortie de l'élément tubulaire sont destinées à être placées à l'extérieur de la cuve, la sortie de l'élément tubulaire étant destinée à être raccordée via une conduite à l'entrée d'alimentation de la cuve. Selon cette variante, le dispositif de récupération de chaleur est destiné à être disposé à l'extérieur de la cuve du système de l'invention sur la partie extérieure non immergée du tube échangeur de chaleur ou sur une conduite d'évacuation des gaz de combustion vers l'extérieur.

Selon une autre variante, l'entrée et la sortie de l'élément tubulaire sont destinées à être placées à l'intérieur de la cuve, l'entrée de l'élément tubulaire étant alors destinée à être raccordée via une conduite, à l'entrée d'alimentation de la cuve. Selon cette variante, l'ensemble du dispositif de récupération de chaleur est destiné à être disposé à l'intérieur de la cuve du système de l'invention.

Avantageusement, la partie extérieure du tube échangeur de chaleur est équipée d'un système de purge des condensats, par exemple au niveau d'une extrémité coudée reliée à une conduite d'évacuation des gaz vers l'extérieur.

Selon un mode de réalisation particulier, la partie immergée du tube échangeur de chaleur se présente sous la forme d'un serpentin comprenant des brins sensiblement rectilignes, sensiblement parallèles entre eux, et reliés entre eux par des parties coudées, sensiblement en forme générale de U, l'élément tubulaire du dispositif de récupération de chaleur latente de gaz s'étendant sur le ou les derniers brins dudit serpentin.

Selon un mode de réalisation particulier, l'élément tubulaire présente une paroi tubulaire fermée à son extrémité amont par une paroi d'extrémité amont, ladite paroi d'extrémité amont étant traversée de manière sensiblement étanche par le tube échangeur de chaleur, la paroi tubulaire étant équipée d'un tube de raccordement radial à proximité de ladite paroi d'extrémité amont débouchant dans la chambre annulaire.

Selon un mode de réalisation particulier, l'élément tubulaire est ouvert à son extrémité aval.

En variante, l'élément tubulaire présente une paroi tubulaire fermée à son extrémité aval par une paroi d'extrémité aval, ladite paroi d'extrémité aval étant traversée de manière sensiblement étanche par le tube échangeur de chaleur, la paroi tubulaire étant équipée d'un tube de raccordement radial à proximité de la ladite paroi d'extrémité aval débouchant dans la chambre annulaire.

Selon un mode de réalisation particulier, le système comprend une platine portant le brûleur, le tube échangeur de chaleur et le dispositif de récupération de chaleur latente de gaz, ladite platine étant destinée à être montée de manière étanche dans une ouverture de la cuve.

L'invention a également pour objet un système tel que défini précédemment, comprenant une cuve contenant le liquide à chauffer et présentant une entrée de liquide, ledit dispositif de récupération de chaleur latente de gaz étant apte à récupérer toute ou partie de la chaleur latente de gaz combustion du brûleur circulant dans ledit tube échangeur de chaleur et à la transmettre au liquide alimentant la cuve.

Le système de l'invention est particulièrement avantageux pour la production d'eau chaude car l'eau alimentant la cuve présente une température basse, de l'ordre de 10°C, ce qui permet de condenser une grande partie voire la totalité de l'eau en phase vapeur contenue dans les gaz de combustion. Dans cette application, l'entrée de la cuve est destinée à être connectée à une source de liquide froid à chauffer. Elle peut notamment être directement raccordée au réseau d'alimentation en eau du bâtiment dans lequel est installé le système de l'invention.

Le système de l'invention peut également être utilisé dans une installation de chauffage en circuit fermé. Dans cette application, l'entrée et la sortie de la cuve sont destinées à être connectées à un circuit en boucle fermée, le liquide sortant de la cuve circulant dans le circuit en boucle fermée étant réintroduit dans la cuve par ladite entrée.

### Brève description des figures

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence au dessin schématique annexé, sur lequel :
- la figure 1 illustre, de façon schématique, un premier mode de réalisation du système de chauffage à tube immergé de l'invention dans une application de production de liquide chaud;
- la figure 2 est un agrandissement de la partie du système délimitée par le cercle A dans la figure 1; et,
- la figure 3 illustre, de façon schématique, un second mode de réalisation du système de chauffage à tube immergé de l'invention dans une application de réchauffeur de liquide chaud dans un circuit à boucle fermée.

### Description détaillée de modes de réalisation de l'invention

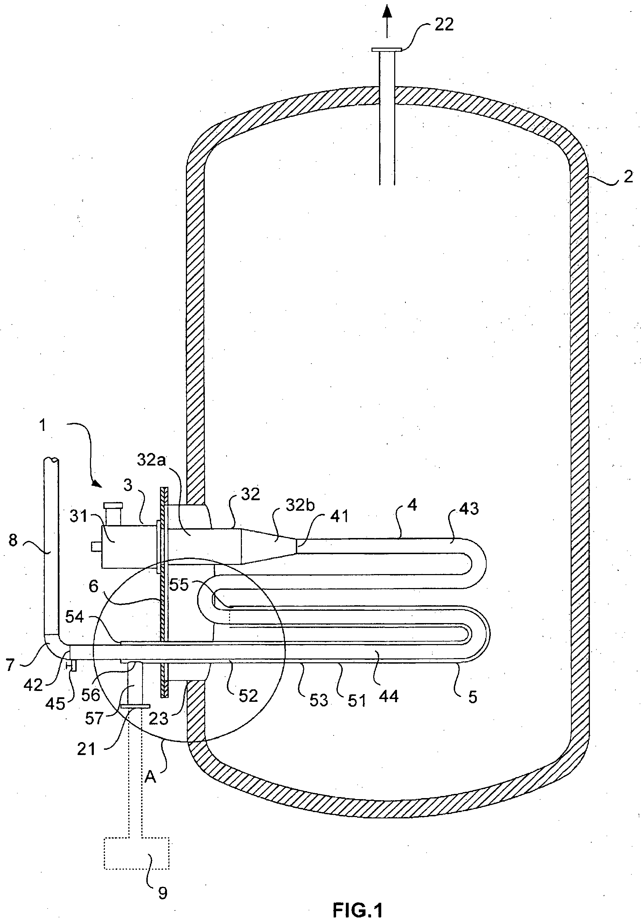

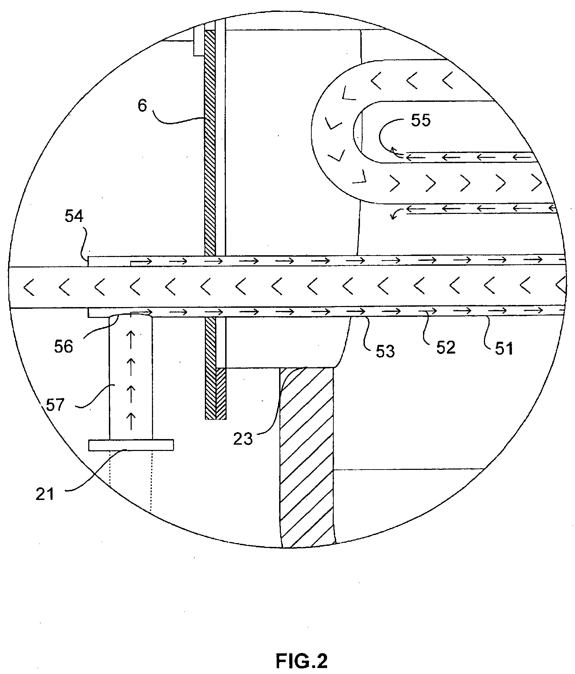

En se référant aux figures 1 et 2, le système de chauffage à tube immergé compact de l'invention, référencé 1 dans son ensemble, est monté sur une cuve 2 contenant un liquide à chauffer et comprend essentiellement un brûleur 3 alimenté en air comburant et en gaz combustible pour produire des gaz de combustion, un tube échangeur de chaleur 4 placé à l'intérieur de la cuve dans lequel circulent les gaz de combustion produits par le brûleur 3 et un dispositif de récupération de chaleur latente de gaz 5 apte à récupérer toute ou partie de la chaleur de gaz de combustion circulant dans le tube échangeur et à la transmettre au liquide alimentant la cuve 2.

Dans l'exemple de la figure 1, la cuve 2 est une cuve fermée et isolée thermiquement comprenant une entrée de liquide 21 en partie inférieure et une sortie de liquide 22 en partie supérieure. Cette configuration de cuve est plus particulièrement adaptée à la production d'eau chaude.

Une platine 6 portant le brûleur 3, le tube échangeur de chaleur 4 et le dispositif de récupération de chaleur latente de gaz 6 est montée de manière étanche dans une ouverture 23 ménagée dans la paroi de la cuve 2.

Le brûleur 3, bien connu de l'homme du métier, comprend une chambre dite de répartition 31, pour recevoir un mélange air/gaz, communiquant avec une chambre de combustion 32 dans laquelle la combustion du mélange air/gaz est réalisée. La chambre de combustion 32 comprend une portion 32a de forme cylindrique et une portion 32b de forme tronconique permettant de la raccorder au tube échangeur de chaleur 4 de diamètre inférieur. Les gaz de combustion produits par le brûleur 3 comprennent principalement de l'eau en phase vapeur et différents oxydes de carbone, notamment du dioxyde de carbone et du monoxyde de carbone.

Le tube échangeur de chaleur 4 se présente sous la forme de serpentin comprenant une pluralité de brins sensiblement rectilignes, sensiblement parallèles entre eux et reliés entre eux par des portions coudées en forme générale de U. Ce tube 4 comprend une extrémité amont 41 raccordée à la portion 32a de la chambre de combustion 32 et une extrémité aval 42 disposée à l'extérieur de la cuve 2. Cette extrémité aval 42 est raccordée par une partie coudée 7 à une conduite 8 verticale d'évacuation des gaz de combustion. Les gaz de combustion issus de la chambre de combustion 32 circulent dans le tube échangeur de chaleur 4 de l'extrémité amont 41 vers l'extrémité aval 42 de manière à chauffer le liquide contenu dans la cuve 2 et ils sont ensuite évacués vers l'extérieur par la conduite 7.

La partie immergée du tube 4 comprend une portion amont 43, raccordée à la chambre de combustion 32 du brûleur par l'extrémité amont 41, se prolongeant par une portion aval 44 débouchant à l'extérieur de la cuve 2. Dans l'exemple de la figure 1, la portion amont 43 comprend les deux premiers brins du serpentin et la partie aval comprend les deux brins suivants. Cette portion aval 44 se prolonge à l'extérieur pour son raccordement à la conduite 8 d'évacuation des gaz via la partie coudée 7.

Le dispositif de récupération de chaleur latente de gaz 5 est positionné pour récupérer toute ou partie de la chaleur latente de gaz de combustion circulant dans la portion aval 44 du tube 4. Ce dispositif condense toute ou partie de l'eau en phase vapeur contenue dans les gaz de combustion circulant dans cette portion du tube et le liquide de refroidissement employé pour effectuer cette condensation est le liquide destiné à alimenter la cuve.

Ce dispositif de récupération de chaleur latente de gaz 5 comprend essentiellement un élément tubulaire 51 entourant la portion aval 44 du tube échangeur de chaleur et définissant avec cette dernière une chambre annulaire 52. Cet élément tubulaire 51 présente une paroi tubulaire 53 s'étendant le long des deux brins et de la partie coudée de la portion aval 44. Cette paroi tubulaire 53 est fermée à son extrémité amont par une paroi d'extrémité amont 54 et est ouverte à son extrémité aval 55. La paroi d'extrémité amont 54 est traversée de manière sensiblement étanche par le tube échangeur de chaleur 4. Une ouverture 56 est ménagée dans la paroi tubulaire 53, à proximité de la paroi d'extrémité amont 54, pour alimenter en liquide la chambre annulaire 52. L'ouverture 56 et l'extrémité aval 54 ouverte constitue respectivement l'entrée et la sortie de la chambre annulaire 52. L'ouverture 56 est positionnée à l'extérieur de la cuve 2 pour son raccordement à une source de liquide 9 via un tube de raccordement radial 57 s'étendant vers le bas. L'extrémité inférieure de ce tube de raccordement constitue l'entrée de liquide 21 de la cuve.

Un système de purge 45 est prévu sur le tube échangeur de chaleur 4, à proximité de l'extrémité aval 42, pour évacuer les condensats issus de la condensation des gaz de combustion. Il est placé au point le plus bas du tube échangeur de chaleur 4. Avantageusement, la partie finale du tube 4 est inclinée vers le bas, le système de purge 9 étant positionné au point le plus bas de cette partie finale ou sur la partie coudée 7.

En fonctionnement, les gaz de combustion produits par le brûleur 3 circulent dans le tube échangeur de chaleur 4, d'abord dans la portion amont 43 puis dans la portion aval 44, et sont ensuite évacués vers l'extérieur par la conduite 7. La chaleur des gaz de combustion est transférée au liquide contenu dans la cuve 2 par la portion amont 43 du tube et au liquide entrant dans la cuve par la portion aval 44. Le liquide entrant dans la cuve 2 est utilisé pour condenser, à la fin du parcours des gaz de combustion dans le tube 4, toute ou partie de l'eau en phase vapeur contenue dans les gaz de combustion. La chaleur latente des gaz de combustion est transmise dans la chambre annulaire 52 au liquide entrant dans la cuve.

Les dimensions de la chambre annulaire du dispositif de récupération de chaleur latente des gaz sont déterminées en fonction de plusieurs paramètres, notamment de la température du liquide entrant dans la cuve et de la température des gaz de combustion au niveau de la portion aval du tube échangeur de chaleur.

Le système de l'invention est particulièrement avantageux pour la production d'un liquide chaud, en particulier pour la production d'eau chaude car l'eau fourni par la source 8 (réseau de distribution d'eau) est à une température d'environ 10°, ce qui permet de condenser une grande partie, voire la totalité, de l'eau en phase vapeur contenue dans les gaz de combustion. Dans cette application, il permet d'augmenter le rendement du système d'environ 10% (le gain de rendement variant selon le gaz combustible utilisé) lorsque l'eau en phase vapeur des gaz de combustion est entièrement condensée.

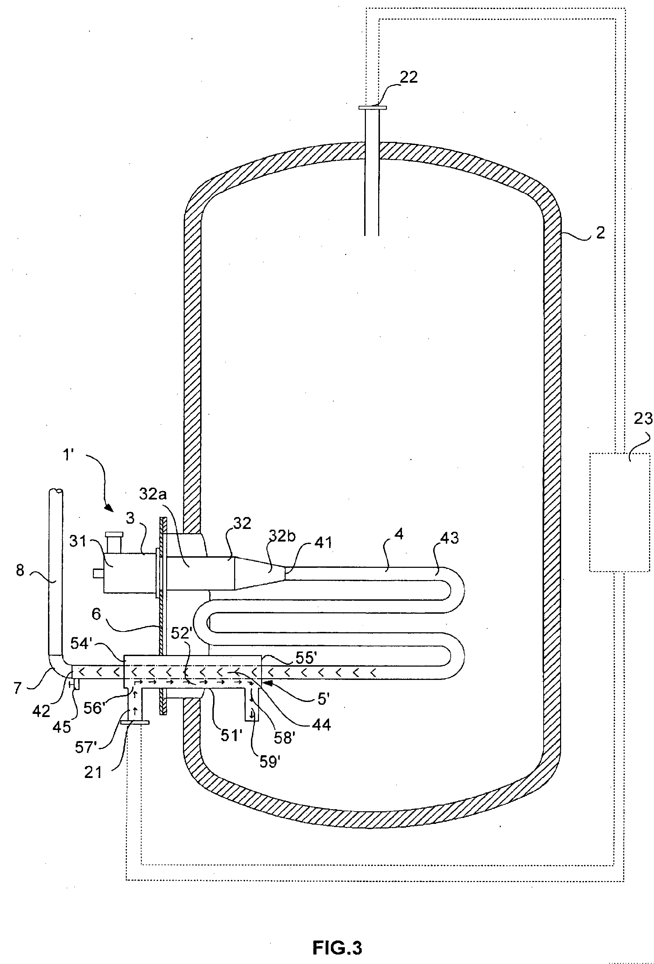

Le système de l'invention peut également être utilisé dans un circuit à boucle fermée pour maintenir une température de liquide dans une boucle de circulation de liquide. Dans cette application, le liquide sortant de la cuve 2 par la sortie 22 est réintroduit dans la cuve par l'entrée 21 après circulation dans la boucle. Cette application est illustrée par la figure 3, dans laquelle la sortie 22 est connectée via une boucle d'échange de chaleur 23 à l'entrée 21 de la cuve.

La figure 3 représente un système de chauffage 1' comportant un dispositif de récupération de chaleur latente de gaz, référencé 5', différent de celui des figures 1 et 2. Dans cette figure, seules les références des éléments du dispositif de récupération de chaleur latente de gaz sont modifiées par rapport aux figures 1 et 2.

Dans cette figure, la portion aval du tube sur laquelle est installé le dispositif de récupération de chaleur latente, référencé 5', est plus réduite que dans la figure 1. L'élément tubulaire 51' est moins long mais plus large de sorte que le volume de la chambre annulaire 52' est sensiblement le même que précédemment. La paroi tubulaire 53' de l'élément tubulaire 51' est fermée à son extrémité amont par une paroi d'extrémité amont 54' et à son extrémité aval par une paroi d'extrémité aval 55'. Ces deux parois d'extrémité sont traversées de manière sensiblement étanche par la portion aval 44 du tube échangeur de chaleur 4. Deux ouvertures 56' et 58' sont ménagées dans la paroi tubulaire 53', l'une à proximité de la paroi d'extrémité amont 54' et l'autre à proximité de la paroi d'extrémité aval 55'. Des tubes de raccordement radial, 57' et 59', s'étendant vers le bas sont connectés respectivement aux ouvertures 56'et 58'.

Dans ces modes de réalisation, l'entrée de l'élément tubulaire est positionnée à l'extérieur de la cuve et constitue l'entrée d'alimentation en liquide de la cuve et la sortie est positionnée à l'intérieur de la cuve. Bien entendu, on peut envisager une variante de réalisation dans laquelle l'entrée et la sortie de l'élément tubulaire sont toutes deux placées à l'extérieur de la cuve. Le dispositif de récupération de chaleur latente des gaz est donc disposé à l'extérieur de la cuve sur la partie extérieure du tube 4 et/ou sur la conduite d'évacuation des gaz et la sortie de l'élément tubulaire est alors raccordée alors via une conduite à l'entrée de liquide de la cuve.

Selon une autre variante, l'entrée et la sortie de l'élément tubulaire sont placées à l'intérieur de la cuve, l'entrée de l'élément tubulaire étant alors raccordée via une conduite, à l'entrée de liquide de la cuve. Selon cette variante, l'ensemble du dispositif de récupération de chaleur latente de gaz est disposé à l'intérieur de la cuve du système de l'invention.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de chauffage à tube immergé (1,1') destiné à être monté sur une cuve (2) comprenant une entrée de liquide (21) et à chauffer un liquide dans ladite cuve (2), ledit système comprenant:
- un brûleur (3),
- un tube échangeur de chaleur (4) destiné à être placé au moins en partie dans la cuve, raccordé par une extrémité amont (41) à la chambre de combustion du brûleur et dont l'extrémité aval (42) est destinée à être disposée à l'extérieur de la cuve, de sorte que les gaz de combustion du brûleur circulent dans le tube échangeur de chaleur (4) pour chauffer le liquide contenu dans la cuve,
- un dispositif de récupération de chaleur latente de gaz (5,5') apte à récupérer toute ou partie de la chaleur latente des gaz combustion et à la transmettre à un liquide destiné à alimenter la cuve,
**caractérisé en ce que** le tube échangeur de chaleur (4) comprend une partie immergée comportant une portion amont (43) connectée par l'extrémité amont (41) au brûleur se prolongeant par une portion aval (44) destinée à déboucher à l'extérieur de la cuve, ledit dispositif de récupération de chaleur latente de gaz (5,5') étant apte à récupérer toute ou partie de la chaleur latente des gaz combustion circulant dans ladite portion aval (44),
et **en ce que** le dispositif de récupération de chaleur latente de gaz (5,5') comprend un élément tubulaire (51,51') entourant une partie du tube échangeur de chaleur et définissant une chambre annulaire (52,52') avec ladite partie du tube échangeur de chaleur, ledit élément tubulaire (51,51') comprenant une entrée et une sortie, de sorte que le liquide destiné à alimenter la cuve circule dans ladite chambre annulaire (52,52'), de ladite entrée vers ladite sortie, afin de récupérer toute ou partie de la chaleur latente des gaz de combustion circulant dans ladite partie du tube échangeur de chaleur.

2. Système de chauffage selon la revendication 1, **caractérisé en ce que** la sortie (55) dudit élément tubulaire est disposée au niveau de la partie immergée du tube échangeur de chaleur.

3. Système de chauffage selon la revendication 2, **caractérisé en ce que** l'entrée (56) dudit élément tubulaire est destinée à être disposée à l'extérieur de la cuve et à former l'entrée de la cuve.

4. Système de chauffage selon l'une des revendications 1 à 3, **caractérisé en ce que** la partie immergée du tube échangeur de chaleur se présente sous la forme d'un serpentin comprenant des brins sensiblement rectilignes, sensiblement parallèles entre eux, et reliés entre eux par des parties coudées, sensiblement en forme générale de U, l'élément tubulaire du dispositif de récupération de chaleur latente de gaz s'étendant sur le ou les derniers brins dudit serpentin.

5. Système de chauffage selon l'une des revendications 1 à 4, **caractérisé en ce que** l'élément tubulaire (51,51') présente une paroi tubulaire (53,53') fermée à son extrémité amont par une paroi d'extrémité amont (54,54'), ladite paroi d'extrémité amont étant traversée de manière sensiblement étanche par le tube échangeur de chaleur, la paroi tubulaire étant équipée d'un tube de raccordement radial (57) à proximité de la ladite paroi d'extrémité amont (54,54') débouchant dans la chambre annulaire (52,52').

6. Système de chauffage selon l'une des revendications 1 à 5, caractérisé en ce l'élément tubulaire (51,51') est ouvert à son extrémité aval (55).

7. Système de chauffage selon l'une des revendications 1 à 6, **caractérisé en ce qu'**il comprend une platine (6) portant le brûleur (3), le tube échangeur de chaleur (4) et le dispositif de récupération de chaleur latente de gaz (5,5'), ladite platine étant destinée à être montée de manière étanche dans une ouverture (23) de la cuve.

8. Système de chauffage à tube immergé pour la production d'un liquide chaud, en particulier d'eau chaude, selon l'une des revendications 1 à 7, **caractérisé en ce que** l'entrée (21) de la cuve est destinée à être connectée à une source (9) de liquide froid à chauffer.

9. Système de chauffage à tube immergé selon l'une des revendications 1 à 7, **caractérisé en ce que** l'entrée (21) et la sortie (22) de la cuve sont destinées à être connectées à un circuit en boucle fermée (23).

## Patentansprüche

1. Heizungssystem mit Tauchrohr (1,1'), welches dafür vorgesehen ist, an einem Behälter (2) montiert zu sein, welcher einen Flüssigkeitseinlass (21) aufweist, und eine Flüssigkeit in dem Behälter (2) aufzuheizen, wobei das System aufweist:
- einen Brenner (3),
- ein Wärmetauscherrohr (4), welches dafür vorgesehen ist, zumindest zum Teil in dem Behälter angeordnet zu sein, das mit seinem stromaufwärts liegenden Ende (41) mit der Brennkammer des Brenners verbunden ist und dessen stromabwärts liegendes Ende (42) dafür vorgesehen ist, außerhalb des Behälters angeordnet zu sein, derartig, dass die Verbrennungsgase des Brenners durch das Wärmetauscherrohr (4) strömen, um die in dem Behälter befindliche Flüssigkeit aufzuheizen,
- eine Vorrichtung zur Rückgewinnung der latenten Wärme von Gas (5,5'), welche geeignet ist, die gesamte oder einen Teil der latenten Wärme der Verbrennungsgase zurückzugewinnen und sie auf eine Flüssigkeit zu übertragen, welche vorgesehen ist, den Behälter zu versorgen,
**dadurch gekennzeichnet, dass** das Wärmetauscherrohr (4) einen eingetauchten Abschnitt aufweist, welcher einen stromaufwärts liegenden Abschnitt (43) umfasst, welcher durch das stromaufwärts liegende Ende (41) mit dem Brenner verbunden ist und welcher sich durch einen stromabwärts liegenden Abschnitt (44) in die Länge zieht, welcher dafür vorgesehen ist, in die Außenumgebung des Behälters zu münden, wobei die Vorrichtung zur Rückgewinnung der latenten Wärme von Gas (5,5') geeignet ist, die gesamte oder einen Teil der latenten Wärme der in dem stromabwärts liegenden Abschnitt (44) strömenden Verbrennungsgase zurückzugewinnen,
und dass die Vorrichtung zur Rückgewinnung der latenten Wärme von Gas (5,5') ein rohrförmiges Element (51,51') aufweist, welches einen Teil des Wärmetauscherrohrs umgibt und eine ringförmige Kammer (52,52') mit dem Teil des Wärmetauscherrohrs definiert, wobei das rohrförmige Element (51,51') einen Einlass und einen Auslass aufweist, derartig, dass die Flüssigkeit, welche dafür vorgesehen ist, den Behälter zu versorgen, durch die ringförmige Kammer (52,52') vom Einlass zum Auslass strömt, um die ganze oder einen Teil der latenten Wärme der Verbrennungsgase, welche durch den Teil des Wärmetauscherrohrs strömen, zurückzugewinnen.

2. Heizungssystem nach Anspruch 1, **dadurch gekennzeichnet, dass** der Auslass (55) des rohrförmigen Elements im Bereich des eingetauchten Abschnitts des Wärmetauscherrohrs angeordnet ist.

3. Heizungssystem nach Anspruch 2, **dadurch gekennzeichnet, dass** der Einlass (56) des rohrförmigen Elements dafür vorgesehen ist, in der Außenumgebung des Behälters angeordnet zu sein und den Einlass des Behälters zu bilden.

4. Heizungssystem nach einem der Ansprüche 1 bis 3, **dadurch gekennzeichnet, dass** der eingetauchte Abschnitt des Wärmetauscherrohrs sich in der Form einer Schlangenlinie darstellt und im Wesentlichen geradlinige, parallel zueinander verlaufende Stränge aufweist, welche durch gekrümmte, im Wesentlichen allgemein U-förmige Abschnitte miteinander verbunden sind, wobei sich das rohrförmige Element der Vorrichtung zur Rückgewinnung der latenten Wärme von Gas über den oder die letzten Stränge der Schlangenlinie erstreckt.

5. Heizungssystem nach einem der Ansprüche 1 bis 4, **dadurch gekennzeichnet, dass** das rohrförmige Element (51,51') eine rohrförmige Wand (53,53') darstellt, welche an ihrem stromaufwärts liegenden Ende von einer Wand am stromaufwärts liegenden Ende (54,54') geschlossen ist, wobei die Wand am stromaufwärts liegenden Ende auf im Wesentlichen dichte Weise von dem Wärmetauscherrohr durchdrungen wird, wobei die rohrförmige Wand in der Nähe der Wand am stromaufwärts liegenden Ende (54,54') mit einem radialen Verbindungsrohr (57) ausgerüstet ist, welches in die ringförmige Kammer (52,52') mündet.

6. Heizungssystem nach einem der Ansprüche 1 bis 5, **dadurch gekennzeichnet, dass** dieses rohrförmige Element (51,51') an seinem stromabwärts liegenden Ende (55) offen ist.

7. Heizungssystem nach einem der Ansprüche 1 bis 6, **dadurch gekennzeichnet, dass** es eine den Brenner (3), das Wärmetauscherrohr (4) und die Vorrichtung zur Rückgewinnung der latenten Wärme von Gas (5,5') tragende Platte (6) aufweist, wobei die Platte dafür vorgesehen ist, auf dichte Weise in einer Öffnung (23) des Behälters montiert zu sein.

8. Heizungssystem mit Tauchrohr für die Produktion einer heißen Flüssigkeit, insbesondere heißen Wassers, nach einem der Ansprüche 1 bis 7, **dadurch gekennzeichnet, dass** der Einlass (21) des Behälters dafür vorgesehen ist, mit einer Quelle (9) mit aufzuheizender kalter Flüssigkeit verbunden zu werden.

9. Heizungssystem mit Tauschrohr nach einem der Ansprüche 1 bis 7, **dadurch gekennzeichnet, dass** der Eintritt (21) und der Austritt (22) des Behälters dafür vorgesehen ist, mit einem geschlossenen Kreislauf (23) verbunden zu werden.

## Claims

1. Immersion tube heating system (1, 1') intended to be mounted on a tank (2) comprising a liquid inlet (21) and to heat a liquid in said tank (2), said system comprising:
- a burner (3),
- a heat exchanger tube (4) intended to be placed at least partially in the tank, connected by an upstream end (41) to the combustion chamber of the burner and the downstream end (42) of which is intended to be arranged outside the tank, such that the combustion gases from the burner circulate in the heat exchanger tube (4) to heat the liquid contained in the tank,
- a latent gas heat recovery device (5, 5') suitable for recovering all or part of the latent heat from the combustion gases and for transmitting it to a liquid intended to feed the tank,
**characterized in that** the heat exchanger tube (4) comprises a immersion part comprising an upstream portion (43) connected by the upstream end (41) to the burner that is extended by a downstream portion (44) intended to emerge outside the tank, said latent gas heat recovery device (5, 5') being suitable for recovering all or part of the latent heat from the combustion gases circulating in said downstream portion (44),
and **in that** the latent gas heat recovery device (5, 5') comprises a tubular element (51, 51') surrounding a part of the heat exchanger tube and defining an annular chamber (52, 52') with said part of the heat exchanger tube, said tubular element (51, 51') comprising an inlet and an outlet, such that the liquid intended to feed the tank circulates in said annular chamber (52, 52'), from said inlet to said outlet, in order to recover all or part of the latent heat from the combustion gases circulating in said part of the heat exchanger tube.

2. Heating system according to Claim 1, **characterized in that** the outlet (55) of said tubular element is arranged in the immersion part of the heat exchanger tube.

3. Heating system according to Claim 2, **characterized in that** the inlet (56) of said tubular element is intended to be arranged outside the tank and to form the inlet of the tank.

4. Heating system according to one of Claims 1 to 3, **characterized in that** the immersion part of the heat exchanger tube takes the form of a pipe coil comprising substantially rectilinear strands, substantially parallel to one another, and linked together by bent parts, substantially generally U-shaped, the tubular element of the latent gas heat recovery device extending over the last strand or strands of said pipe coil.

5. Heating system according to one of Claims 1 to 4, **characterized in that** the tubular element (51, 51') has a tubular wall (53, 53') closed at its upstream end by an upstream end wall (54, 54'), said upstream end wall being passed through in a substantially tight manner by the heat exchanger tube, the tubular wall being equipped with a radial connection tube (57) in proximity to said upstream end wall (54, 54') emerging in the annular chamber (52, 52').

6. Heating system according to one of Claims 1 to 5, **characterized in that** the tubular element (51, 51') is open at its downstream end (55).

7. Heating system according to one of Claims 1 to 6, **characterized in that** it comprises a plate (6) bearing the burner (3), the heat exchanger tube (4) and the latent gas heat recovery device (5, 5'), said plate being intended to be mounted in a tight manner in an opening (23) of the tank.

8. Immersion tube heating system for the production of a hot liquid, in particular hot water, according to one of Claims 1 to 7, **characterized in that** the inlet (21) of the tank is intended to be connected to a source (9) of cold liquid to be heated.

9. Immersion tube heating system according to one of Claims 1 to 7, **characterized in that** the inlet (21) and the outlet (22) of the tank are intended to be connected to a closed loop circuit (23).
